# EUROPEAN PATENT APPLICATION

(11) **EP 0 940 077 A2**
(43) Date of publication of application: **08.09.1999**
(21) Application number: 99301528.8
(22) Date of filing: 02.03.1999
(51) Int. Cl.: A01K 15/00, A61D 3/00

(54) **Sheep handling apparatus**

(30) Priority: 03.03.1998 GB 9804330
(71) Applicant: L.M. Bateman & Company Limited, Cheddleton, Nr. Leek, Staffordshire (GB)
(72) Inventor: Thorne, Derek, Cheddleton, Nr.Leek, Staffordshire (GB)
(74) Representative: Swindell & Pearson

(57) **Abstract**

Sheep handling apparatus (10) suitable for restraining a sheep and allowing it to be turned over. The apparatus (10) comprises a frame (14, 20, 22) on which a sheep support arrangement (40) is mounted. The arrangement (40) is pivotally mounted relative to the frame (14, 20, 22) and is arranged such that when a sheep enters the arrangement (40) from the open end of the apparatus (10), the arrangement (40) automatically closes onto the sheep. The sheep may then be turned over by rotating the arrangement (40).

## Description

This invention concerns sheep handling apparatus, and particularly but not exclusively apparatus which permits a sheep to be restrained and turned over.

A number of sheep rollover crates have been devised which permit a sheep to be restrained in a frame and subsequently turned over to permit work to be carried out on the sheep. A number of disadvantages have been encountered with prior arrangements. These disadvantages include the fact that it can be difficult to urge sheep into the crate. Difficulties can be encountered in accommodating sheep of different sizes and shapes. Good access is not always available to all parts of the sheep. A considerable amount of effort may be required to turn a sheep over. Problems can be encountered if the sheep is not securely held.

According to the present invention there is provided sheep handling apparatus, the apparatus comprising a frame, and a sheep support arrangement mounted on the frame, said arrangement being arranged such that when a sheep enters the arrangement from a first entry end of the apparatus, the arrangement automatically closes on to the sheep to restrain the sheep within the arrangement.

The support arrangement preferably comprises an abutment member against which a sheep entering the said arrangement is engagable, and engagement of the sheep against the abutment member as the sheep tries to pass through the apparatus causes the closing of the arrangement on the sheep.

The support arrangement is preferably arranged such that the abutment member is locatable to rest in an open position, and engagement of the sheep against the abutment member urges the abutment member from the open position.

The support arrangement is preferably spring urged towards a closed position whereby to engage the sheep. The support arrangement is preferably engagable against a sheep's neck to restrain the sheep in the apparatus.

Preferably at least the part of the support arrangement which engages the sheep's neck is pivotally mounted relative to the frame, such that when the abutment member is in the open position the at least part of the support arrangement can be pivoted upwardly to allow the sheep to leave the apparatus by a second exit end.

The arrangement preferably comprises a side member spaced from the abutment member such that the sheep's neck is locatable therebetween, with the spacing variable upon movement of the abutment member. Adjustment means are preferably provided to permit the position of the side member to be set as may be required for different sizes of sheep.

The support arrangement is preferably arranged such that at least when not closed, a sheep entering the apparatus from the entry end can substantially see through the apparatus to beyond the exit end, whereby the sheep is encouraged to try to pass through the apparatus.

The apparatus preferably comprises first and second sides, with the frame substantially open on the first side and substantially closed on the second side so as to prevent sheep passing through said second side.

The support arrangement is preferably mounted on a subframe, which subframe is pivotally movable relative to the frame about a substantially vertical first axis, between a position wholly within the frame and a second position inclined relative to the direction of movement of sheep through the apparatus. The first axis is preferably located towards the exit end of the apparatus, and towards the first side of the apparatus. The subframe is preferably selectively lockable in said first and desirably also said second positions. The locking of the subframe in position is preferably operable by a foot pedal.

The support arrangement is preferably pivotally movable relative to the subframe about a generally horizontal second axis, aligned generally parallel to the direction of movement of sheep through the apparatus when the subframe is in the first position, whereby to permit a sheep to be turned upside down. The second axis is preferably located towards the first side of the apparatus. The second axis is preferably inclined towards the second side of the apparatus, in the direction to the entry end. The second axis is preferably provided substantially at one side of, and desirably generally midway up, the support arrangement, such that the support arrangement when inverted extends on the opposite side of the subframe to the path of sheep passing through the apparatus.

A handle is preferably provided on the support arrangement, and desirably on an upper part thereof, to facilitate turning over of a sheep.

The support arrangement is preferably selectively mountable on the subframe at one of a plurality of heights on the support arrangement, whereby to permit the support arrangement to be pivoted generally about the centre of gravity for different size sheep.

The support arrangement is preferably pivotally movable relative to the frame about a generally horizontal third axis which is substantially normal to the direction of movement of sheep through the apparatus, to permit a sheep to be inclined downwardly whereby to be ready for artificial insemination. The support arrangement may comprise a floor spaced above the ground. Alternatively the apparatus may include a pivotally mounted floor to permit a sheep to be inclined.

The support arrangement preferably comprises a first member locatable towards the first side of the apparatus, except when the support arrangement is inverted, and a second member located towards the second side of the apparatus.

The side member preferably constitutes part of the first member.

The first member may be shaped to generally correspond to the shape of a sheep, and desirably at least upper and/or lower parts thereof curve or are inclined, inwardly.

The first member is preferably of variable length, and may comprise an extension part locatable adjacent the rear of a sheep, and telescopically mounted on a main body.

The second member is preferably pivotally mounted on the support arrangement about a fourth axis, so as to be pivotally movable between a position alongside a sheep in the apparatus, and a position clear of the sheep.

The fourth axis preferably extends generally parallel to the direction of movement of sheep through the apparatus.

The second member of the support arrangement is preferably shaped to provide support beneath a sheep when in the closed position. Said second member preferably comprises an engagement part pivotally mounted thereon about a generally horizontal axis and movable between open and closed positions, the engagement part being engagable beneath a sheep when moved to the closed position, but clear of the sheep when in the open position. Said engagement part may comprise a pair of spaced inwardly curved bars, which are desirably spaced to locate between the front and rear feet of a sheep.

The second member preferably comprises two parts, a first part for supporting the sheep's head and including the abutment member, and a second part for supporting the sheep's body, and including the engagement part. The two parts of the support arrangement are preferably rotatable about the fourth axis either together or independently of each other.

The second part of the support arrangement preferably comprises the first and second members. Means are preferably provided for releasably locking the engagement part in the closed position. A plurality of closed positions may be provided, usable with different size sheep. The locking means may comprise a ratchet means which automatically engages when a closed position is reached.

The first part may comprise means for supporting a sheep's head, and the support means may be locatable immediately above a sheep's head when restrained in the support arrangement, prior to turning upside down.

A gate is preferably provided to selectively close the first end of the apparatus. The gate is preferably arranged such that when fully open the gate closes a part of a first side of the apparatus. Desirably, said first side of the apparatus is substantially fully closed when the gate is open, respectively by the support arrangement and the gate. The gate is preferably arranged to rest in the open position, and is desirably spring urged to the closed position, such that a sheep held in the support arrangement will tend to knock the gate from its rest position such that it automatically closes.

The apparatus may be portable and may be mounted on wheels, and/or carrying handles may be provided. The carrying handles may be movable between in use and out of use positions. Attachment means may be provided on the apparatus to permit fitting thereof into a sheep race system.

An embodiment of the present invention will now be described by way of example and with reference to the accompanying drawings, in which:-
Fig. 1 is a diagrammatic plan view of sheep handling apparatus according to the invention;
Fig. 2 is a diagrammatic side view of the apparatus of Fig. 1;
Fig. 3 is a diagrammatic cross-sectional view along the line Y-Y of Fig. 3;
Fig. 4 is a diagrammatic cross-sectional view along the line X-X of Fig. 1;
Fig. 5 is a diagrammatic cross-sectional view along the line Z-Z of Fig. 1; and
Figs. 6-10 are sequential diagrammatic plan views of the apparatus of Fig. 1 in use.

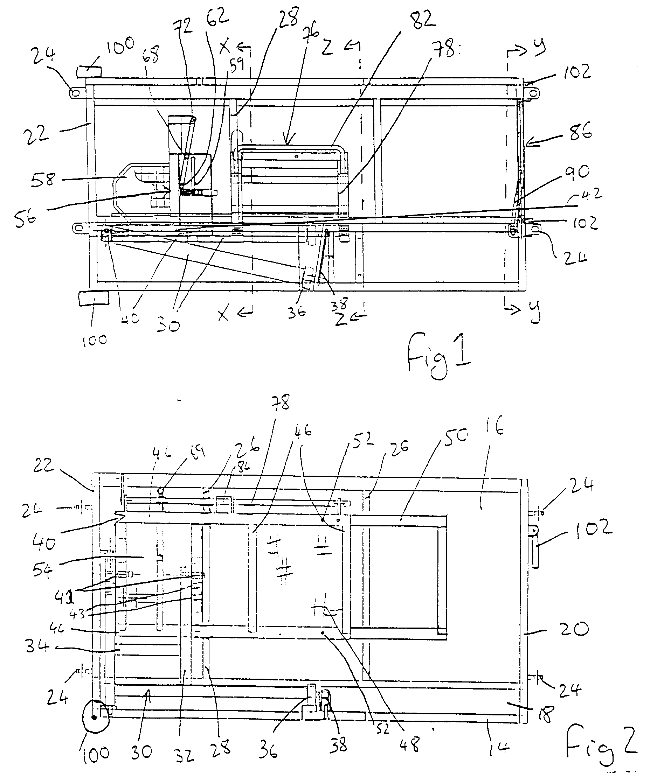

The drawings show sheep handling apparatus 10 suitable for restraining a sheep 12 and allowing it to be turned over. The apparatus 10 comprises a base plate 14 with a solid side wall 16 running along one side thereof. A gap 18 is provided between the bottom of the wall 16 and the base plate 14 to prevent accumulation of dirt and the like. Upstanding rectangular frames 20,22 are provided at each end of the base plate 14 extending adjacent the side wall 16 about two thirds of the way across the plate 14 along respective end edges thereof. The frames 20,22 define respectively an entry 20 and exit 22 for the apparatus on the right hand and left hand ends respectively as shown in Fig. 1. Mounting brackets 24 are provided on each of the frames 20,22 on the outer faces thereof to permit mounting into a sheep race system as is conventional. Two support bars 26 extend equi-distant from each other and from the ends of the plate 14, from the plate 14 up the side wall 16. The left most support bar 26 mounts across its lower corner a curved plate 28 to urge a sheep passing through the apparatus away from the wall 16.

A subframe 30 is pivotally mounted to the base plate 14 adjacent the side of the frame 22 which is spaced from the wall 16. The frame 30 is pivotal between a position parallel to the wall 16, and a position pivoted away from the wall 16, outwardly such that its free end is adjacent the side of the plate 14 away from the wall 16. The subframe 30 has a generally L-shape configuration with an additional upright member 32 spaced from the stem of the L, and connected thereto by a cross member 34. A transverse wheel 36 is provided on the free end of the base of the subframe 30 to assist movement thereof. A foot operated pedal 38 is provided to permit selective locking of the subframe 30 in either of the two positions described above, both positions being illustrated in Fig. 1.

A further frame 40 is pivotally mounted to the subframe 30. The frame 40 is mounted to the frame 30 by mountings 41 towards the top of the stem of the L of the frame 30 and also the upright 32. Two further spaced holes 13 are provided below the mountings 41 to permit the frame 41 to be alternatively mounted at either of two lower positions. The pivotal mountings 41 are inclined such that the pivotal axis 42 is inclined gently towards the side wall 16 as is shown in Fig. 1.

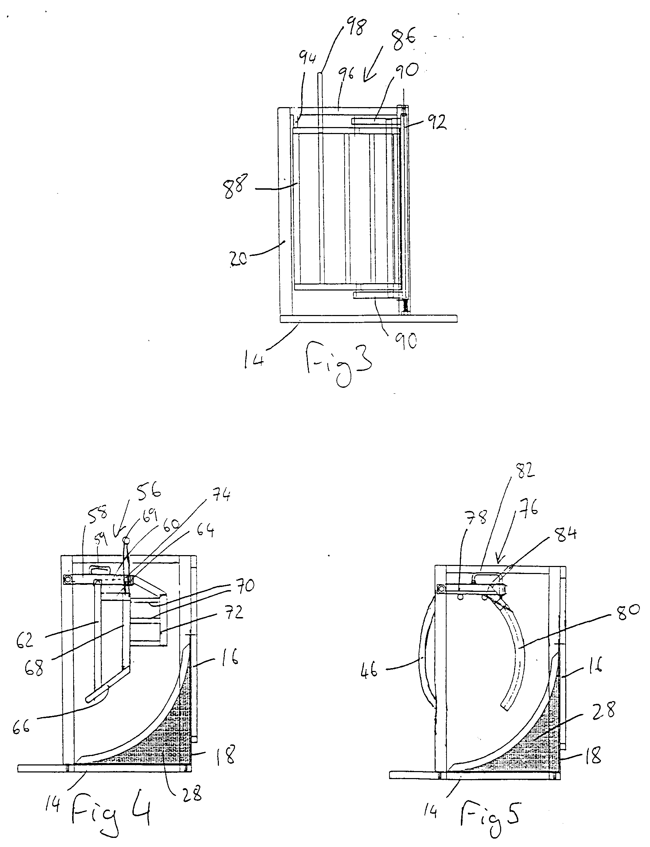

The frame 40 comprises two horizontal members 44 interconnected by four spaced curved members 46 which curve away from the wall 16. Mesh 48 is provided between the three right most members 46 as shown in Fig. 2, with the mesh 48 being curved to correspond to the members 46. A similarly curved U-shaped extension 50 extends from the right hand side in the frame 40 in a telescopic manner and is slidably mounted therein and lockable by bolts 52. A plate 54 is mounted between the left hand end most two members 44. The plate 54 is adjustably mounted such that it can be moved towards or away from the wall 16.

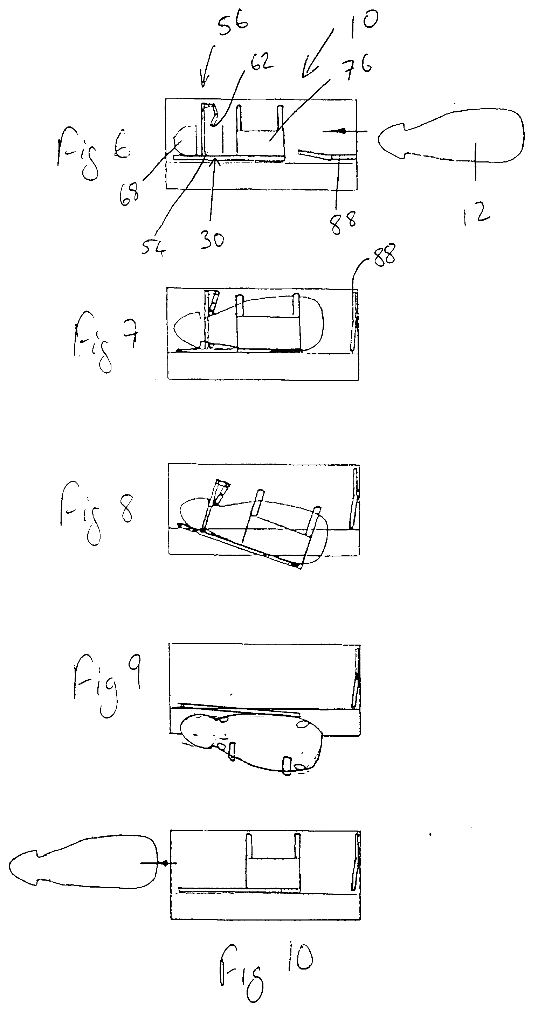

A head engagement arrangement 56 is pivotally mounted to the top left hand end of the frame 40. The arrangement 56 comprises a top most plate 58 with an upstanding handle 59, and in part of which a downwardly facing curved track 60 is provided. A head engagement bar 62 has its upper end located in the track 60. The bar 62 is connected by an upper horizontal cross piece 64 and a lower upwardly inclined cross piece 66 to a pivotal mounting on a further vertical bar 68. An upstanding bar 69 extends upwardly from the bar 68 to provide a handle. The bar 68 pivotally mounts three cross members 70 which are pivotally mounted on a further shorter vertical bar 72. This provides a pivotal cantilever arrangement which is sprung by springs (not shown) located on the bar 68, to be urged to a straight alignment, and thus the bar 62 is urged to the left as shown in Fig. 4. At the right hand end of the track 60 a step (not shown) is provided in which the bar 62 can engage at rest against the spring force.

Pivotally mounted to the top of the frame 40 at the right hand side thereof, is a body engagement arrangement 76, which comprises a top frame 78. Two curved bars 80, which curve towards the wall 16, are pivotally mounted to the frame 78 on the opposite side thereof to the frame 40, to curve downwardly in a normal rest condition as shown for example in Fig. 5. The frame 40 and hence bars 80 are spring urged towards the side wall 16 to the position shown in Fig. 5. A handle 82 extends between the bars 80 at the top ends thereof. A ratchet arrangement 84 is provided to permit the frame 40 to be pivoted and held against the spring force in a number of successive positions.

A gate arrangement 86 is provided across the entry frame 20. The arrangement 86 comprises a gate 88 which is pivotally mounted along its length, top and bottom to two cross bars 90. The other ends of the cross bars 90 are pivotally mounted on a vertical bar 92 located adjacent the upright of the frame 20 spaced from the side wall 16. The mounting of the bars 90 on the gate 88 is just closer than the middle of the gate 88 to the bar 92. The cross bars 90 are spring mounted on the bar 92 to urge the gate to a closed position. Due to the mounting of the bars 90 on the gate, the over centre arrangement provided thereby means that the gate 88 will remain in an open position against the spring force if pulled fully open. An upstanding projection 94 is provided on the top free end of the gate 88 and engages in a track 96 extending across the top of the frame 20, to guide the gate 88. A handle 102 in the form of an upstanding bar is provided on the inside of the gate 88 within the frame 20.

Ground engaging wheels 100 are provided on the left hand side of the apparatus as shown in Figs. 1 and 2. Foldable handles 102 are provided on the outer side of the frame 20 to permit movement of the apparatus 10 in conjunction with the wheels 100.

The apparatus can be used in the following fashion. With the bar 62 in the step 64 and hence the head engagement arrangement 56 fully open, the gate 88 is opened and held in position by the over centre mounting thereof. A sheep 12 enters through the entry 20 and is likely to knock the gate 88 such that it will move past the over centre mounting to automatically close. The sheep 12 entering the apparatus 10 will have a generally unobstructed view such that it will try to pass through the apparatus. As its head engages the bar 62 it will knock it from the step 64 such that the bar 62 will be urged along the track 60 to engage with the neck of the sheep thereby trapping the sheep's neck against the plate 54, and restraining the sheep within the apparatus 10.

The body engagement arrangement 76 is then bought to bear by pivoting the frame 78 and hence bars 80 against the ratchet arrangement 44 to secure the whole of the sheep body with the arrangement 76 being held in position by the ratchet arrangement 84. The bars 80 engage between the sheep's front and back legs to extend beneath the sheep 12. The subframe 30 is then swung outwardly by operation of the pedal 38 and pulling to its outermost position.

The sheep can then be turned over by rotating the frame 40 about the pivotal mountings 41. As the axis of rotation 42 points back towards the base plate 14, a relatively small force is required for this. Once the sheep 12 has been inspected and any work carried out as is required, it is returned to a normal alignment by rotating about the axis 42 in an opposite direction. The subframe 30 can then be returned to its original position following release of the pedal 38. The head engagement arrangement 56 will then be released by pushing the bar 60 back to the step 74 by using the handle 69. The head engagement arrangement 56 can then be pivoted relative to the frame 40 and out of the way of the sheep. The body engagement arrangement 76 can then be released using the ratchet arrangement 84 and the sheep is free to leave as shown in Fig. 10.

There is thus described sheep handling apparatus with a number of advantages. As can be seen from Fig. 9 with the pivotal subframe good access is provided to the rear of the sheep where most work is generally required. The telescopic arrangement of the further frame allows support to be provided for different length sheep but access to be provided for shorter sheep. Good support is provided to the sheep's head by the plate 58.

The automatic engagement with the sheep's neck, and the fact that the sheep will see a substantially clear view means that the sheep will readily move into the apparatus and become automatically restrained. The mounting of the gate and the ready, if not automatic, closing thereof is another advantageous feature. The different height mounting of the restraining arrangements and the direction of the pivotal axis, means that the sheep can be turned with a relatively small force.

Various modifications may be made without departing from the scope of the invention. For example, the restraining arrangement and/or the floor of the apparatus could be made to pivot about a horizontal axis to permit a sheep to be tipped forward for artificial insemination. Different linkages and/or shapes of components could be used.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Sheep handling apparatus (10), the apparatus (10) comprising a frame (14, 20, 22), and a sheep support arrangement (40) mounted on the frame (14, 20, 22), said arrangement (40) being arranged such that when a sheep enters the arrangement (40) from a first entry end of the apparatus (10), the arrangement (40) automatically closes on to the sheep to restrain the sheep within the arrangement (40).

2. Sheep handling apparatus according to claim 1, characterised in that the support arrangement (40) comprises an abutment member (62) against which a sheep entering the said arrangement (40) is engagable, engagement of the sheep against the abutment member (62) as the sheep tries to pass through the apparatus (10) causing the closing of the arrangement (40) on the sheep.

3. Sheep handling apparatus according to claim 2, characterised in that the support arrangement (40) is arranged such that the abutment member (62) is locatable to rest in an open position, engagement of the sheep against the abutment member (62) urges the abutment member (62) from the open position, and the support arrangement (40) is spring urged towards a closed position whereby to engage the sheep.

4. Sheep handling apparatus according to any of claims 1 to 3, characterised in that the support arrangement (40) is engagable against a sheep's neck to restrain the sheep in the apparatus (10), and at least the part (56) of the support arrangement (40) which engages the sheep's neck is pivotally mounted relative to the frame (14, 20, 22), such that when the abutment member (62) is in the open position the at least part of the support arrangement (40) can be pivoted upwardly to allow the sheep to leave the apparatus (10) by a second exit end.

5. Sheep handling apparatus according to claim 4, characterised in that the arrangement (40) comprises a side member (54) spaced from the abutment member (62) such that the sheep's neck is locatable therebetween, with the spacing variable upon movement of the abutment member (62), adjustment means being provided to permit the position of the side member (54) to be set as may be required for different sizes of sheep.

6. Sheep handling apparatus according to any of the preceding claims, characterised in that the support arrangement (40) is arranged such that at least when not closed, a sheep entering the apparatus (10) from the entry end can substantially see through the apparatus (10) to beyond the exit end, whereby the sheep is encouraged to try to pass through the apparatus (10).

7. Sheep handling apparatus according to any of the preceding claims, characterised in that the apparatus (10) comprises first and second sides, with the frame (14, 20, 22) substantially open on the first side and substantially closed on the second side (16) so as to prevent sheep passing through said second side (16).

8. Sheep handling apparatus according to any of the preceding claims, characterised in that the support arrangement (40) is mounted on a subframe (30), the subframe (30) being pivotally movable relative to the frame (14, 20, 22) about a substantially vertical first axis, between a position wholly within the frame (14, 20, 22) and a second position inclined relative to the direction of movement of sheep through the apparatus (10), the first axis being located towards the exit end of the apparatus (10), and towards the first side of the apparatus (10).

9. Sheep handling apparatus according to claim 8, characterised in that the subframe (30) is selectively lockable in said first and desirably also said second positions, and the locking of the subframe (30) in position is operable by a foot pedal (38).

10. Sheep handling apparatus according to claims 8 or 9, characterised in that the support arrangement (40) is pivotally movable relative to the subframe (30) about a generally horizontal second axis (42), aligned generally parallel to the direction of movement of sheep through the apparatus (10) when the subframe (30) is in the first position, whereby to permit a sheep to be turned upside down, the second axis (42) being located towards the first side of the apparatus (10) and inclined towards the second side (16) of the apparatus (10), in the direction to the entry end, the second axis (42) is desirably provided substantially at one side of, and desirably generally midway up, the support arrangement (40), such that the support arrangement (40) when inverted extends on the opposite side of the subframe (30) to the path of sheep passing through the apparatus (10).

11. Sheep handling apparatus according to any of the preceding claims, characterised in that a handle (59) is provided on the support arrangement (40), and desirably on an upper part thereof, to facilitate turning over of a sheep.

12. Sheep handling apparatus according to any of claims 8 to 11, characterised in that the support arrangement (40) is selectively mountable on the subframe (30) at one of a plurality of heights on the support arrangement (40), whereby to permit the support arrangement (40) to be pivoted generally about the centre of gravity for different size sheep.

13. Sheep handling apparatus according to any of claims 8 to 12, characterised in that the support arrangement (40) is pivotally movable relative to the frame (14, 20, 22) about a generally horizontal third axis which is substantially normal to the direction of movement of sheep through the apparatus (10), to permit a sheep to be inclined downwardly whereby to be ready for artificial insemination.

14. Sheep handling apparatus according to any of the preceding claims, characterised in that the support arrangement (40) comprises a floor spaced above the ground, which floor may be pivotally mounted to permit a sheep to be inclined.

15. Sheep handling apparatus according to claim 7 or any of claims 8 to 14 when dependent on claim 7, characterised in that the support arrangement (40) comprises a first member (46) locatable towards the first side of the apparatus (10), except when the support arrangement (40) is inverted, and a second member (76) located towards the second side (16) of the apparatus (10), the side member constituting part of the first member (46), with the first member (46) shaped to generally correspond to the shape of a sheep.

16. Sheep handling apparatus according to claim 15, characterised in that at least upper and/or lower parts of the first member (46) curve or are inclined, inwardly.

17. Sheep handling apparatus according to claims 15 or 16, characterised in that the first member (46) is of variable length and may comprise an extension part (50) locatable adjacent the rear of a sheep, and telescopically mounted on a main body.

18. Sheep handling apparatus according to any of claims 15 to 17, characterised in that the second member (76) is pivotally mounted on the support arrangement (40) about a fourth axis, so as to be pivotally movable between a position alongside a sheep in the apparatus (10), and a position clear of the sheep, the fourth axis extending generally parallel to the direction of movement of sheep through the apparatus (10).

19. Sheep handling apparatus according to claim 18, characterised in that the second member (76) of the support arrangement (40) is shaped to provide support beneath a sheep when in the closed position, may comprise a pair of spaced inwardly curved bars (80), which bars (80) are desirably spaced to locate between the front and rear feet of a sheep.

20. Sheep handling apparatus according to claims 18 or 19, characterised in that the second member (76) comprises an engagement part (80) pivotally mounted thereon about a generally horizontal axis and movable between open and closed positions, the engagement part (80) being engagable beneath a sheep when moved to the closed position, but clear of the sheep when in the open position.

21. Sheep handling apparatus according to claim 20, characterised in that means are provided for releasably locking the engagement part (80) in the closed position, and desirably a plurality of closed positions is provided, usable with different size sheep, and the locking means may comprise a ratchet means (84) which automatically engages when a closed position is reached.

22. Sheep handling apparatus according to any of the preceding claims, characterised in that the support arrangement (40) comprises two parts, a first part (56) for supporting the sheep's head and including the abutment member (62), and a second part (76) for supporting the sheep's body, and including the engagement part (80).

23. Sheep handling apparatus according to claim 22 when dependent on any of claims 18 to 21, characterised in that the two parts of the support arrangement (40) are rotatable about the fourth axis either together or independently of each other, and the second part (76) of the support arrangement (40) comprises the first and second members.

24. Sheep handling apparatus according to any of the preceding claims, characterised in that the first part (56) of the support arrangement (40) is locatable immediately above a sheep's head when restrained in the support arrangement (40), prior to turning upside down.

25. Sheep handling apparatus according to any of the preceding claims, characterised in that a gate (86) is provided to selectively close the first end of the apparatus (10), the gate (86) being arranged such that when fully open the gate (86) closes a part of a first side of the apparatus (10), the first side of the apparatus (10) being substantially fully closed when the gate (86) is open, respectively by the support arrangement (40) and the gate (86).

26. Sheep handling apparatus according to claim 25, characterised in that the gate (86) is arranged to rest in the open position, and is spring urged to the closed position, such that a sheep held in the support arrangement (40) will tend to knock the gate (86) from its rest position such that it automatically closes.
